# EUROPEAN PATENT APPLICATION

(11) **EP 3 089 092 A1**
(43) Date of publication of application: **02.11.2016**
(21) Application number: 16164651.8
(22) Date of filing: 11.04.2016
(51) Int. Cl.: G06Q 20/34

(54) **DATA PROCESSING DEVICE FOR IC CARD ISSUANCE AND IC CARD ISSUANCE DATA GENERATION METHOD**

(30) Priority: 27.04.2015 JP 2015090359
(71) Applicant: Kabushiki Kaisha Toshiba, Minato-ku Tokyo 105-8001 (JP)
(72) Inventor: FUKUOKA, Hiroki, Tokyo, Tokyo 105-8001 (JP)
(74) Representative: Horn Kleimann Waitzhofer Patentanwälte PartG mbB

(57) **Abstract**

A data processing device for IC card issuance includes a common data acquisition unit, an individual data acquisition unit, a storage unit, a data interpretation unit, a data conversion unit and an issuance data generation unit. The storage unit stores multiple pieces of format information that indicate data formats for respective types of individual data. The data interpretation unit determines a data format of the individual data that is acquired by the individual data acquisition unit based on the format information stored in the storage unit. The data conversion unit converts the individual data acquired by the individual data acquisition unit into a predetermined data format according to the data format determined by the data interpretation unit. The issuance data generation unit generates issuance data for use in issuing an IC card based on the individual data in the predetermined data format and common data acquired by the common data acquisition unit.

## Description

### FIELD

Exemplary embodiments of the present invention relate to an data processing device for IC card issuance, an IC card issuance data generation program, and an IC card issuance data generation method.

### BACKGROUND

In recent years, procedures for transferring information stored in an information storage medium for use in various types of transaction and authentication from a magnetic card to an IC card are performed.

When information stored in an information storage medium is transferred from a magnetic card to an IC card, the new IC card will be issued based on magnetic data (individual data) that is recorded in the existing magnetic card, and common data (shared data) that is used by the new IC card to be operable as an IC card.

Ordinarily the magnetic data is configured in a data format that is defined uniquely by each operating organization. Conventional IC card issuance systems issue IC cards for the operating organizations, and thus support only magnetic data in a data format that is defined uniquely by each operating organization. Therefore, conventional IC card issuance systems have the problem that they can deal only with magnetic data (personal data) in specific data formats when information stored in an information storage medium is transferred from an existing magnetic card to an IC card, and thus have low versatility.

### BRIEF DESCRIPTION OF THE DRAWINGS

Fig. 1 is a diagram illustrating an example of a configuration of an IC card issuance system according to an embodiment.
Fig. 2 is a diagram illustrating an example of a configuration of a data processing device for IC card issuance according to the embodiment.
Fig. 3 is a diagram illustrating an example of a configuration of an issuing device according to the embodiment.
Fig. 4 is a diagram illustrating an example of a configuration of an IC card according to the embodiment.
Fig. 5 is a diagram illustrating an example of a configuration of individual data according to the embodiment.
Fig. 6 is a diagram illustrating an example of a configuration of an issuance data generation application according to the embodiment.
Fig. 7 is a flowchart illustrating issuance data generating processing according to the embodiment.

### DETAILED DESCRIPTION

According to an embodiment, a data processing device for IC card issuance includes a common data acquisition unit, an individual data acquisition unit, a storage unit, a data interpretation unit, a data conversion unit, and an issuance data generation unit. The storage unit stores multiple pieces of format information that indicate data formats for respective types of individual data. The data interpretation unit determines a data format of the individual data that is acquired by the individual data acquisition unit based on the format information stored in the storage unit. The data conversion unit converts the individual data acquired by the individual data acquisition unit into a predetermined data format according to the data format determined by the data interpretation unit. The issuance data generation unit generates issuance data for use in issuing an IC card based on the individual data in the predetermined data format and common data acquired by the common data acquisition unit.

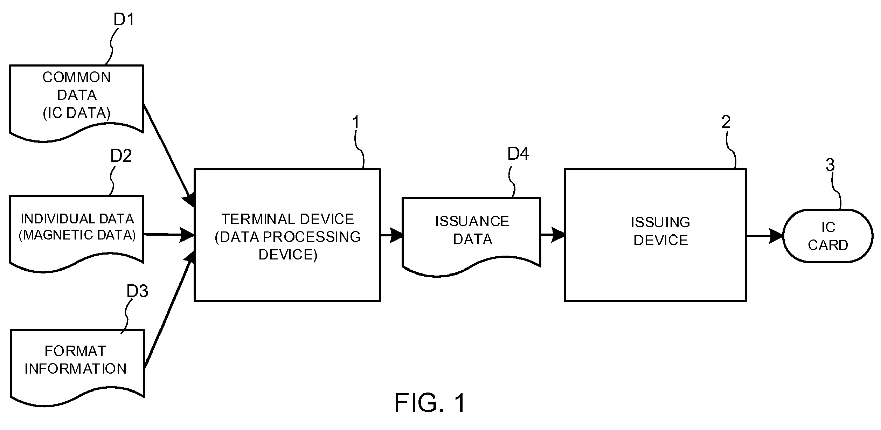

Hereinafter, embodiments will be described with reference to the drawings. Fig. 1 is a diagram schematically illustrating an example of a configuration of an IC card issuance system according to an embodiment. The IC card issuance system is constituted by a terminal device (data processing device for IC card issuance) 1, an issuing device (IC card issuing device) 2, and an IC card (portable electronic device) 3.

The terminal device 1 generates issuance data that is needed for issuing processing for bringing the IC card 3 into an operable state. The terminal device 1 is constituted by, for example, a computer that performs data processing by executing a program. The terminal device 1 may be one computer or may be constituted by a plurality of computers. Furthermore, the terminal device 1 and the issuing device 2 may be formed as one device.

By executing an IC card issuance data processing program, the terminal device 1 generates issuance data D4 based on common data D1 and individual data D2 with reference to format information D3. The common data D1 is information to make the IC card operable as an IC card (referred to also as IC data). The common data D1 is data according to the specification of the IC card to be issued. The common data D1 includes, for example, an application and security data for use in operating the IC card 3, information on the issuer (operating organization) of the IC card 3, and the like. Furthermore, the common data D1 may include data for initializing the IC card (IC chip). In this context, "initializing" refers to partitioning a memory region in order that information of the application and the like are stored therein.

The individual data D2 is data on each card to be issued (card holder data). For example, when an existing magnetic card (card including a magnetic recording layer) is changed to an IC card, the individual data D2 may be information (magnetic data) that is stored in the existing magnetic card. The individual data D2 is, for example, personal information, information on the owner of the IC card 3, such as a PIN code specific to the card, or the like. The individual data D2 is information that is configured in a file format and a data structure (hereinafter, referred to collectively as "data format") unique for each card operating organization or operation purpose. In the present embodiment, it is assumed that individual data of multiple types of data formats is input to the terminal device 1.

The format information D3 is information for use in determining the data format (such as file format and data structure) of the individual data D2 to be input. The format information D3 is input in advance to the terminal device 1 before processing for generating the issuance data D4 (issuance data generating processing) is executed. The terminal device 1 has stored multiple pieces of format information D3 (D3a, D3b, ...) that respectively correspond to various types of data formats of the individual data D2, and references the format information D3 in the issuance data generating processing.

The issuing device (IC card issuing device) 2 executes the issuing processing for the IC card (portable electronic device) 3 based on the issuance data D4 from the terminal device 1. For example, the issuing device 2 writes data based on the issuance data D4 into a nonvolatile memory of the IC card 3. Furthermore, the issuing device 2 may, for example, write data into a magnetic recording layer of the IC card 3, or may emboss the substrate (body) of the IC card 3.

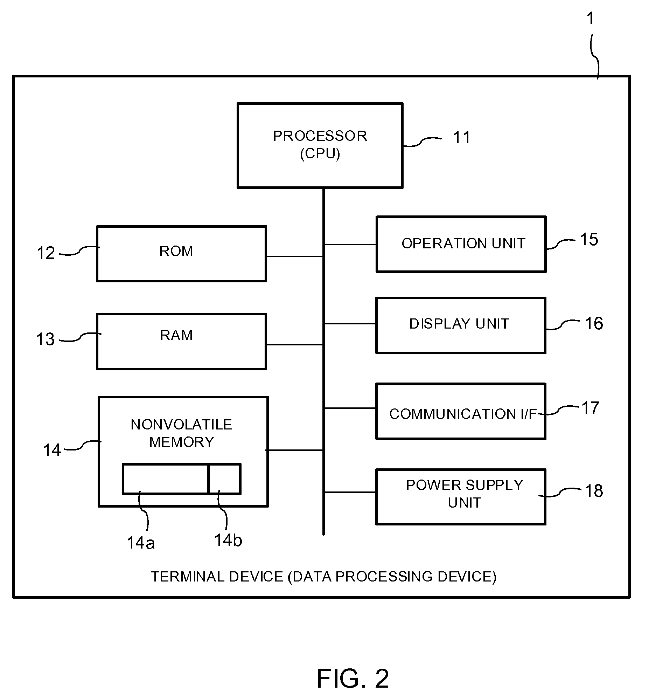

Hereinafter, the configuration of the terminal device 1 will be described. Fig. 2 is a block diagram illustrating an example of a configuration of the terminal device 1. As shown in Fig. 2, the terminal device 1 includes a processor (CPU) 11, a ROM 12, a RAM 13, a nonvolatile memory 14, an operating unit 15, a display unit 16, a communication interface 17, and a power supply unit 18. The processor 11, the ROM 12, the RAM 13, the nonvolatile memory 14, the operating unit 15, the display unit 16, and the communication interface 17 are connected to each other via a bus. The ROM 12, the RAM 13, and the nonvolatile memory 14 constitute a storage unit.

The processor 11 functions as a control unit for controlling the entire terminal device 1. The processor 11 is, for example, a CPU. The processor 11 performs various types of processing based on control programs and control data stored in the ROM 12 or the nonvolatile memory 14. The processor 11 functions as a data processing device for IC card issuance that generates the issuance data D4 by executing, for example, an IC card issuance data generation application (issuance data generation application) that is stored in the ROM 12 or the nonvolatile memory 14.

The ROM 12 is a non-rewritable nonvolatile memory. The ROM 12 functions as, for example, a program memory for storing a program for use in control, control data, and the like. The RAM 13 is a volatile memory that functions as a working memory. The RAM 13 temporarily stores, for example, data that is being processed by the processor 11, and the like. Furthermore, the RAM 13 temporarily stores data to be transmitted to and received from an external device via the communication interface 17. Furthermore, the RAM 13 temporarily stores a program that is executed by the processor 11.

The nonvolatile memory 14 is a rewritable nonvolatile memory. The nonvolatile memory 14 is constituted by, for example, an HDD (hard disk drive), an SSD (solid state drive), or the like. The nonvolatile memory 14 stores, for example, a program for use in control, control data, an application, data for use in the application, and the like. In the configuration example shown in Fig. 2, the nonvolatile memory 14 has a storage region 14a, in which an issuance data generation application that will be described later is stored, and a storage region 14b, in which multiple pieces of format information D3 (D3a, D3b, ...) respectively indicating multiple types of data formats of individual data are stored. The storage region 14b stores the multiple pieces of format information D3 (D3a, D3b, ...) respectively indicating multiple types of data formats used for the individual data (magnetic data).

The operating unit 15 is a user interface for generating an operation signal based on an operation that is input by an operator. The operating unit 15 is constituted by, for example, a keyboard, a touch panel, a numerical keypad, a pointing device, or the like. The operating unit 15 inputs the generated operation signal to the processor 11. The processor 11 executes processing based on the operation signal corresponding to the operation that is input by the operator using the operating unit 15.

The display unit 16 displays various types of information based on an image signal from a display processing module such as the processor 11 or a graphic controller. The display unit 16 is constituted by, for example, a liquid-crystal display. The operating unit 15 and the display unit 16 may be configured as a display device having a touch panel.

The communication interface 17 is an interface device for performing communication with another device in the IC card issuance system. For example, the processor 11 of the terminal device 1 acquires the common data D1 and the individual data D2 from an external device via the communication interface 17. Furthermore, the communication interface 17 may receive the format information D3 from an external device. Furthermore, the processor 11 of the terminal device 1 supplies the issuance data D4 to the issuing device 2 via the communication interface 17. The power supply unit 18 supplies power to the constituent components of the terminal device 1. The power supply unit 18 receives power from, for example, a commercial power source, converts the voltage of the power from the commercial power source into a predetermined voltage, and supplies the power of the predetermined voltage to the constituent components of the terminal device 1.

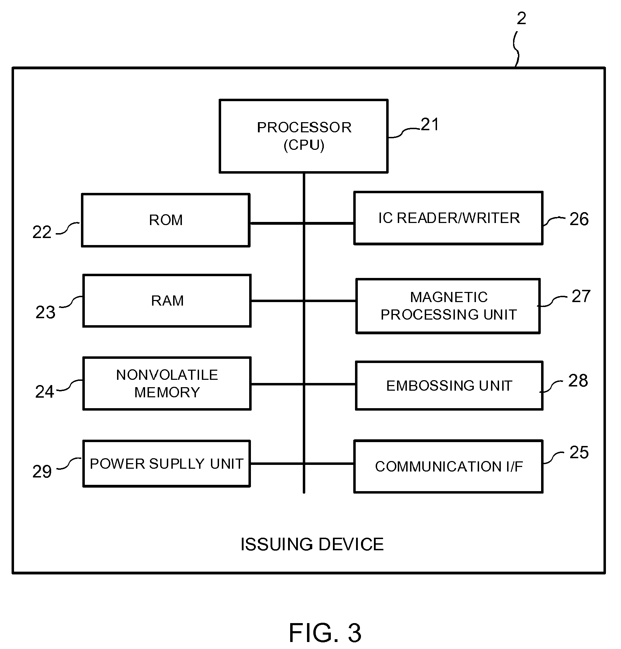

Hereinafter, the configuration of the issuing device 2 will be described. Fig. 3 is a block diagram illustrating an example of a configuration of the issuing device 2. The issuing device 2 issues the IC card 3 based on the issuance data D4.

As shown in Fig. 3, the issuing device 2 includes a processor (CPU) 21, a ROM 22, a RAM 23, a nonvolatile memory 24, a communication interface 25, an IC reader/writer 26, a magnetic processing unit 27, an embossing unit 28, and a power supply unit 29. The processor 21, the ROM 22, the RAM 23, the nonvolatile memory 24, the communication interface 25, the IC reader/writer 26, the magnetic processing unit 27, and the embossing unit 28 are connected to each other via a bus.

The processor 21 functions as a control unit for controlling the entire issuing device 2. The processor 21 is, for example, a CPU. The processor 21 performs various types of processing based on control programs and control data that are stored in the ROM 22 or the nonvolatile memory 24. The processor 21 functions as an IC card issuing device for issuing an IC card by executing, for example, an IC card issuance program stored in the ROM 22 or the nonvolatile memory 24.

The ROM 22 is a nonvolatile memory. The ROM 22 stores, for example, a program for use in control, control data, and the like. The RAM 23 is a volatile memory that functions as a working memory. The RAM 23 temporarily stores data that is being processed by the processor 21, and the like. For example, the RAM 23 temporarily stores data to be transmitted to and received from an external device via the communication interface 25. Furthermore, the RAM 23 temporarily stores a program that is executed by the processor 21.

The nonvolatile memory 24 is a rewritable nonvolatile memory. The nonvolatile memory 24 is constituted by, for example, an HDD (hard disk drive), an SSD (solid state drive), or the like. The nonvolatile memory 24 stores, for example, a program for use in control, control data, an application, data for use in the application, and the like.

The communication interface 25 is an interface device for performing communication with another device in the IC card issuance system. For example, the processor 21 of the issuing device 2 receives the issuance data D4 from the terminal device 1 via the communication interface 25.

The IC reader/writer 26 is a module (interface) for writing data into a memory of the IC card 3 or reading data from the memory of the IC card 3. For example, the processor 21 of the issuing device 2 executes processing for writing data based on IC chip coding data of the issuance data D4 into the nonvolatile memory of the IC card 3 using the IC reader/writer 26.

The IC reader/writer 26 transmits and receives data to and from the IC card 3 by contact or contactless communication.

If the IC card to be issued is a contact type IC card, the IC reader/writer 26 is constituted by an interface for contact communication. In this case, the IC reader/writer 26 includes a slot to which the IC card 3 is to be mounted, and contact terminals for connecting to a contact pattern of an interface of the IC card 3. When the IC card 3 is mounted to the slot, the plurality of contact terminals of the IC reader/writer 26 are connected to the contact pattern of the IC card 3. Accordingly, the issuing device 2 and the IC card 3 are electrically connected to each other. The IC reader/writer 26 performs supply of power, supply of a clock, input of a reset signal, transmission and reception of data, and the like with respect to the IC card 3 that is mounted to the slot.

Furthermore, if the IC card to be issued is a contactless type IC card, the IC reader/writer 26 is constituted by a communication control unit, an antenna, and an interface for contactless communication. In this case, the IC reader/writer 26 lets the communication control unit perform, for example, signal processing, such as coding, decoding, modulation, or demodulation, on data to be transmitted and received. Furthermore, the IC reader/writer 26 supplies the coded and modulated data to the antenna. The antenna generates a magnetic field based on the supplied data. Accordingly, the IC reader/writer 26 can transmit data without being in contact with the contactless type IC card 3 that is present in a range in which communication is possible. Furthermore, the antenna of the IC reader/writer 26 detects a magnetic field and generates a signal that corresponds to the detected magnetic field. The communication control unit of the IC reader/writer 26 demodulates and decodes the received signal. Accordingly, the IC reader/writer 26 can receive data transmitted from the contactless type IC card 3.

The magnetic processing unit 27 is a module for writing information into the magnetic recording layer of the IC card 3. The processor 21 of the issuing device 2 lets the magnetic processing unit 27 write information into the magnetic recording layer of the IC card 3 based on magnetic coding data of the issuance data D4. The embossing unit 28 is a module for embossing the substrate of the IC card 3. The processor 21 of the issuing device 2 lets the embossing unit 28 emboss the substrate of the IC card 3 based on embossing data of the issuance data D4. The power supply unit 29 supplies power to the constituent components of the issuing device 2. The power supply unit 29 receives power from, for example, a commercial power source, converts the voltage of the power from the commercial power source into a predetermined voltage, and supplies the power of the predetermined voltage to the constituent components of the issuing device 2.

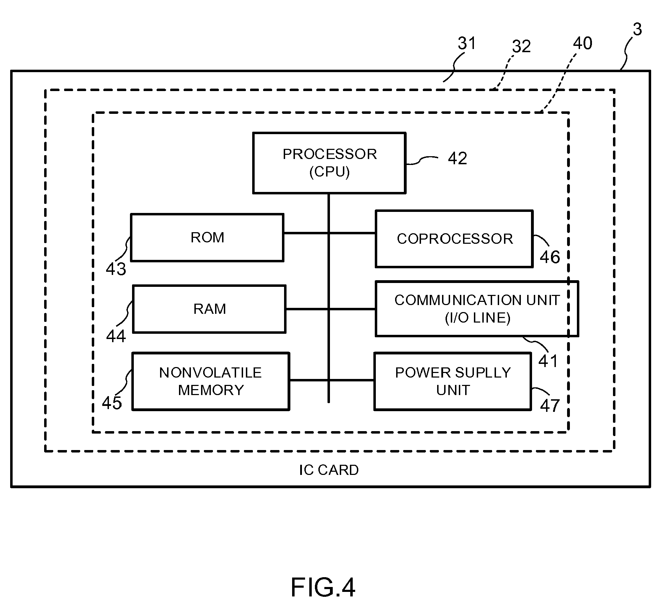

Hereinafter, the configuration of the IC card 3 will be described. Fig. 4 is a block diagram illustrating an example of a configuration of the IC card 3 according to the embodiment. The IC card 3 is a portable electronic device. As shown in Fig. 4, the IC card 3 includes a body 31, and an IC module 32 provided within the body 31. The body 31 is a substrate, and is formed in a shape of a card (for example, rectangular) by a plastic or the like. The body 31 may have any shape as long as the IC module 32 can be placed thereon, without being limited to the rectangular shape. The IC module 32 is buried into the body 31. The IC module 32 includes an IC chip 40 and a communication unit 41. The IC chip 40 and an interface unit of the communication unit 41 form the IC module 32 while being connected to each other.

The IC chip 40 includes a processor (CPU) 42, a ROM 43, a RAM 44, a nonvolatile memory 45, a coprocessor 46, a power supply unit 47, and the like. Furthermore, the IC chip 40 includes a communication control unit serving as a part of the communication unit 41, and is connected to the interface unit of the communication unit 41. The communication unit 41, the processor 42, the ROM 43, the RAM 44, the nonvolatile memory 45, the coprocessor 46, and the power supply unit 47 are connected to each other via a bus.

The communication unit 41 is an interface via which communication with the IC reader/writer 26 of the issuing device 2 or an IC reader/writer of another terminal device (external device) is performed. The communication unit 41 is, for example, Universal Asynchronous Receiver Transmitter (UART) or the like.

If the IC card is a contact type IC card, the communication unit 41 includes an interface unit serving as a contact pattern that is brought into contact with the contact terminals of the IC reader/writer 26 of the issuing device 2. The contact pattern serves as contact terminals that are made of conductive metal or the like, and are formed so as to be exposed to the surface of the body 31. That is, the contact pattern is formed so as to be able to contact with the IC reader/writer 26 of the issuing device 2. The contact pattern is formed by partitioning a metal surface into a plurality of areas. Each of the divided areas functions as a terminal. The communication unit 41 includes the communication control unit that is connected to the contact pattern, and transmits and receives data to and from the IC reader/writer 26 via the contact pattern.

Furthermore, if the IC card is a contactless type IC card, the communication unit 41 is configured as a unit for contactless communication. The communication unit 41 for contactless communication includes the communication control unit and an antenna serving as an interface unit. The antenna of the communication unit 41 is made of, for example, a metal wire that is arranged in a predetermined shape, constituting the IC module 32. The communication control unit of the communication unit 41 for contactless communication is connected to the antenna, and controls signals that are transmitted and received by the antenna.

If, for example, data is transmitted to an external device (for example, the issuing device 2 or another terminal device), the communication control unit of the communication unit 41 performs modulation (amplification) of data to be transmitted. For example, the communication control unit performs signal processing such as coding or load modulation on data to be transmitted. The communication control unit supplies an output signal serving as data subjected to the signal processing to the antenna. The antenna generates a magnetic field based on the signal supplied from the communication control unit. Accordingly, the communication unit 41 of the IC card 3 can transmit data to an external device by contactless communication.

Furthermore, if data is received from an external device (for example, the issuing device 2 and another terminal device), the antenna supplies, to the communication control unit, an induced electric current that is generated by an electric wave including the data transmitted from the external device. The communication control unit demodulates and decodes the induced electric current generated on the antenna. The communication control unit acquires binary data by analyzing the signal received by the antenna, and transmits the analyzed data to the processor 42. Accordingly, the communication unit 41 of the IC card 3 can receive data from the external device by contactless communication.

The processor 42 functions as a control unit for controlling the entire IC card 3. The processor 42 performs various types of processing based on control programs and control data that are stored in the ROM 43 or the nonvolatile memory 45. For example, the processor 42 performs various types of processing in accordance with commands received from the issuing device 2 and another terminal device, and generates data such as a response serving as a processing result.

The ROM 43 is a nonvolatile memory that has stored in advance programs for use in control, control data, and the like. In the manufacturing stage of the IC chip 40, the ROM 43 in which the control programs, the control data, and the like are stored is incorporated into the IC chip 40. That is, the control programs and the control data that are stored in the ROM 43 are incorporated in advance according to the specification of the IC card 3.

The RAM 44 is a volatile memory that functions as a working memory. The RAM 44 temporarily stores data that is being processed by the processor 42, and the like. For example, the RAM 44 temporarily stores data received from the issuing device 2 and another terminal device via the communication unit 41. Furthermore, the RAM 44 temporarily stores data to be transmitted to the issuing device 2 and another terminal device via the communication unit 41. Moreover, the RAM 44 temporarily stores a program to be executed by the processor 42.

The nonvolatile memory 45 includes, for example, a data-writable and rewritable nonvolatile memory such as EEPROM (registered trademark). The nonvolatile memory 45 stores control programs and various types of data according to the operation purpose of the IC card 3. For example, in the nonvolatile memory 45, a program file, a data file, and the like are generated. Control programs and various types of data are written into the generated files. The processor 42 can realize various types of processing by executing the programs stored in the nonvolatile memory 45 or the ROM 43.

The coprocessor 46 is an operation unit for performing cryptographic processing. For example, the coprocessor 46 performs processing such as encryption, decoding, hash calculation, or random number generation, in accordance with commands from the issuing device 2 and another terminal device. For example, if mutual authentication commands are received from the issuing device 2 and the other terminal device, the coprocessor 46 will execute operational processing of mutual authentication processing.

The power supply unit 47 supplies power to the constituent components of the IC card 3. If the IC card 3 has a configuration for performing contact communication, the power supply unit 47 will supply power that is fed from the IC reader/writer 26 of the issuing device 2 via the contact pattern of the communication unit 41 to the constituent components of the IC card 3.

Furthermore, if the IC card 3 has a configuration for performing contactless communication, the power supply unit 47 will generate power based on an electric wave, particularly, a carrier wave that is transmitted from the antenna of the IC reader/writer 26 of the issuing device 2. The power supply unit 47 further generates an operation clock. The power supply unit 47 supplies the generated power and operation clock to the constituent components of the IC card 3. When being supplied with power, the constituent components of the IC card 3 are brought into an operational state.

Hereinafter, the individual data D2 will be described. The individual data D2 is information called as "card-holder data" that includes personal information and the like that are to be written into an individual IC card. For example, the individual data D2 includes personal information such as the name and address of a card-owner, and card-specific information such as expiration date and PAN (Primary Account Number) of the card. Furthermore, if a case in which a magnetic card is replaced by an IC card is considered, the individual data D2 may be data (magnetic data) that is stored in a magnetic recording unit of the magnetic card.

The individual data D2 is information that is constituted by a data format (file format, data structure, and the like) unique for each operating organization or operation purpose. For example, the individual data D2 is information based on the content of application by a user (card-owner). The individual data D2 is stored in a database in a data format that is determined uniquely by an organization (operating organization) such as a bank or a credit loan company that serves as an issuer of the IC card. Examples of the file format of the individual data D2 include a binary format, an XML format, a CSV format, and a text format. Furthermore, if the file format is the binary format, an offset and a data length of each type of data are determined as the data structure of the individual data D2.

The format information D3 that is to be stored in the storage region 14b is information indicating the above-described data format of the individual data. That is, the format information D3 includes, for each type of individual data, information on the file format and information on the data structure. For example, the format information D3 for the individual data in the binary format includes information indicating that the file format is the binary format, and information indicating, as a data structure, offsets and data lengths of various types of data of the individual data (binary data). Furthermore, the format information D3 for the individual data in the XML format (CSV format and text format) includes information indicating that the file format is the XML format (CSV format and text format), and information indicating the data structures of various types of data of the data in this file format.

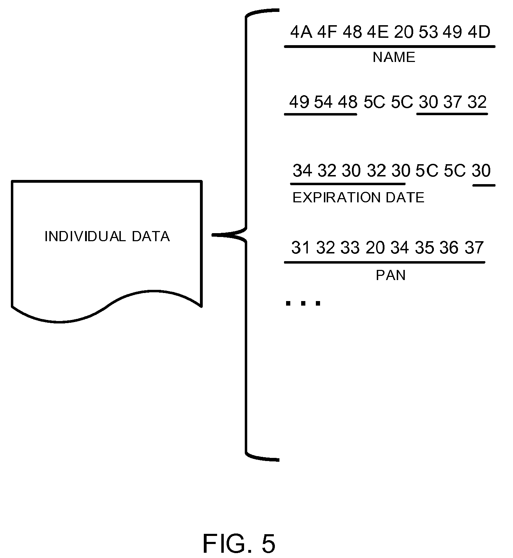

Fig. 5 is a diagram illustrating an example of the individual data D2. In the example shown in Fig. 5, the individual data D2 is in the binary format. In the individual data D2 shown in Fig. 5, various types of information such as "name", "expiration date", and "PAN" are arranged for a predetermined data length of the binary format data.

With respect to the individual data D2 as shown in Fig. 5, its various types of data can accurately be determined if a file format is the binary format and the data structure such as an offset and a data length is apparent. With respect to the individual data D2 shown in Fig. 5, the format information D3, which includes the information indicating that the file format is the binary format and the information indicating the data structures such as offsets and data lengths of various types of data of the individual data, is stored in advance in the storage region 14b of the terminal device 1.

That is, with the issuance data generation application (issuance data generation program) that is executed by the terminal device 1, it is possible to accurately acquire various types of data included in the individual data D2 by recognizing (interpreting) the data format of the individual data D2 with reference to the format information D3. Upon determination (acquisition) of the various types of data included in the individual data D2, the issuance data generation application converts the individual data D2 into a predetermined data format, and generates an IC card issuance data by combining the converted individual data D2 with the common data that is determined according to the specification of the IC card.

If, for example, an agent has been entrusted with issuing an IC card from a plurality of IC card operating organizations (requestors), it is conceivable that individual data transmitted from each requestor has a unique data format. The terminal device 1 according to the present embodiment acquires in advance data format information for each type of individual data, and interprets the individual data based on the data format information. Accordingly, the terminal device 1 according to the present embodiment can deal with individual data in various types of data formats, and can generate issuance data even for the individual data having different data formats that are acquired from the plurality of requestors.

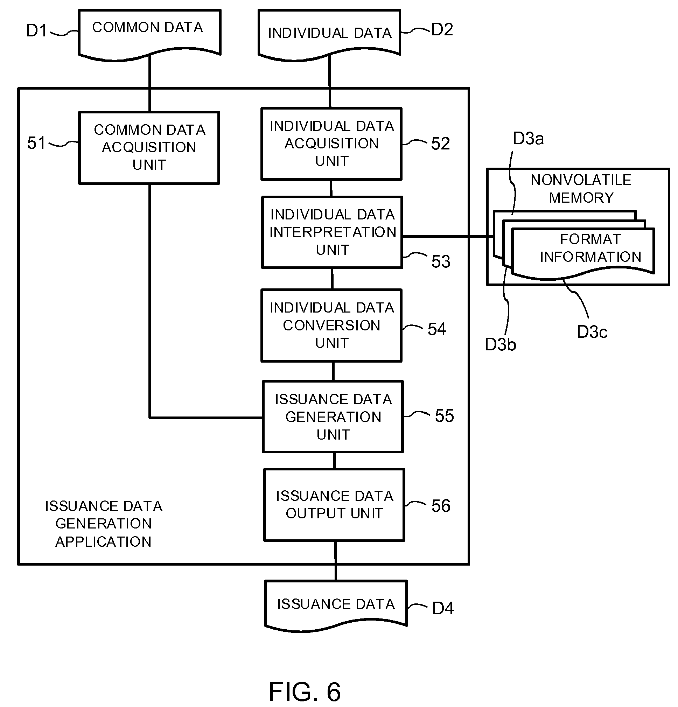

Hereinafter, the issuance data generation function of the terminal device 1 will be described. The terminal device 1 realizes the issuance data generation function for generating the issuance data D4 by the processor 11 executing the issuance data generation application (issuance data generation program) for an IC card. Fig. 6 is a diagram illustrating various functions that are realized by the issuance data generation application executed by the processor 11.

As shown in Fig. 6, the issuance data generation application causes the processor to execute the functions of a common data acquisition unit 51, an individual data acquisition unit 52, an individual data interpretation unit 53, an individual data conversion unit 54, an issuance data generation unit 55, an issuance data output unit 56, and the like. The common data acquisition unit 51 realizes the function of acquiring the common data D1 that is input to the terminal device 1. The common data D1 is input to the terminal device 1 via the communication interface 17. The communication interface 17 may receive input of the common data D1 to the terminal device 1 via a network, or may receive input of the common data D1 to the terminal device 1 from a locally connected device. Furthermore, the common data D1 may be input to the terminal device 1 from a storage medium, or an operator may input the common data D1 to the terminal device 1 using the user interface serving as the operating unit 15.

The individual data acquisition unit 52 realizes the function of acquiring the individual data D2 that is input to the terminal device 1. The individual data D2 is input into to the terminal device 1 via, for example, the communication interface 17. Furthermore, the communication interface 17 may receive input of the individual data D2 to the terminal device 1 from an external device such as a data server via a network, or may receive input of the individual data D2 to the terminal device 1 from a locally connected device. Furthermore, the individual data D2 may be input to the terminal device 1 from a storage medium, or an operator may input the individual data D2 to the terminal device 1 using the user interface serving as the operating unit 15.

The individual data interpretation unit 53 realizes the function of interpreting the data format of the individual data D2. The individual data interpretation unit 53 analyzes (extracts) various types of information of the individual data with reference to the format information stored in the nonvolatile memory 14. If, for example, the individual data D2 is data in the binary format as shown in Fig. 5, the individual data interpretation unit 53 determines various types of information of the individual data (binary data) based on the format information.

Furthermore, the format information D3 is stored in advance in the storage region 14b of the nonvolatile memory 14. The format information D3 is information for use in determining the data format (file format, data structure, and the like) of the individual data D2 that is to be input. In the storage region 14b of the nonvolatile memory 14, pieces of the format information D3 (D3a, D3b, ...) for respective types of individual data supported by the individual data interpretation unit 53 are stored. For example, if the individual data interpretation unit 53 supports three types of individual data, three types of format information D3a, D3b, and D3c are stored in the storage region 14b of the nonvolatile memory 14.

The format information D3 may be any information as long as it is stored in the storage region 14b before issuing processing. The format information D3 can suitably be added. Furthermore, the format information D3 stored in the nonvolatile memory 14 can also be edited using the user interface serving as the operating unit 15.

For example, the format information D3 may be input to the terminal device 1 via the communication interface 17. The communication interface 17 may receive input of the format information D3 to the terminal device 1 via a network, or may receive input of the format information D3 to the terminal device 1 from a locally connected device. Furthermore, the format information D3 may be input to the terminal device 1 from the storage medium, or an operator may input the format information D3 to the terminal device 1 using a user interface serving as the operating unit 15.

The individual data conversion unit 54 realizes the function of generating individual data in a predetermined format (predetermined data format). The individual data conversion unit 54 realizes the function of converting the input individual data D2 into individual data D2' in a predetermined format. The individual data conversion unit 54 converts the input individual data D2 into the individual data D2' in a predetermined format, according to the interpretation of the individual data D2 by the individual data interpretation unit 53. For example, the individual data conversion unit 54 reconstructs various types of information of the input individual data D2 that is determined by the individual data interpretation unit 53 as the individual data D2' in a predetermined format.

The issuance data generation unit 55 realizes the function of generating the issuance data D4. The issuance data generation unit 55 generates the issuance data, based on the individual data D2' in a predetermined format that is generated (converted) by the individual data conversion unit 54 and the common data acquired by the common data acquisition unit 51. The issuance data generated by the issuance data generation unit 55 is data for the issuing device 2 to issue the issuing IC card 3 (to make an IC card in an initial state operable).

The issuance data D4 includes, for example, magnetic coding data, IC chip coding data, embossing data, and the like. The magnetic coding data is data to be recorded in the magnetic recording layer of the IC card 3. The IC chip coding data is data to be written into the nonvolatile memory of the IC card 3. The embossing data is data with which the substrate (body) of the IC card 3 is to be embossed. Note that if an IC card 3 that does not include a magnetic recording layer is to be issued, the issuance data may not necessarily include magnetic coding data. Furthermore, if the IC card 3 is not to be embossed, the issuance data may not necessarily include embossing data.

The issuance data output unit 56 realizes the function of outputting the issuance data D4. The issuance data output unit 56 outputs the issuance data D4 generated by the issuance data generation unit 55. The issuance data output unit 56 outputs the issuance data D4 generated by the issuance data generation unit 55 to the issuing device 2 via the communication interface 17. Furthermore, the issuance data output unit 56 may store the issuance data D4 generated by the issuance data generation unit 55 in the memory (nonvolatile memory 14 or the RAM 13), and may output the issuance data D4 stored in the memory in response to a request from the issuing device 2. Furthermore, the issuance data generation unit 55 may store the issuance data D4 into a recording device that is connectable to the issuing device 2, or a storage medium from which the data is readable by the issuing device 2.

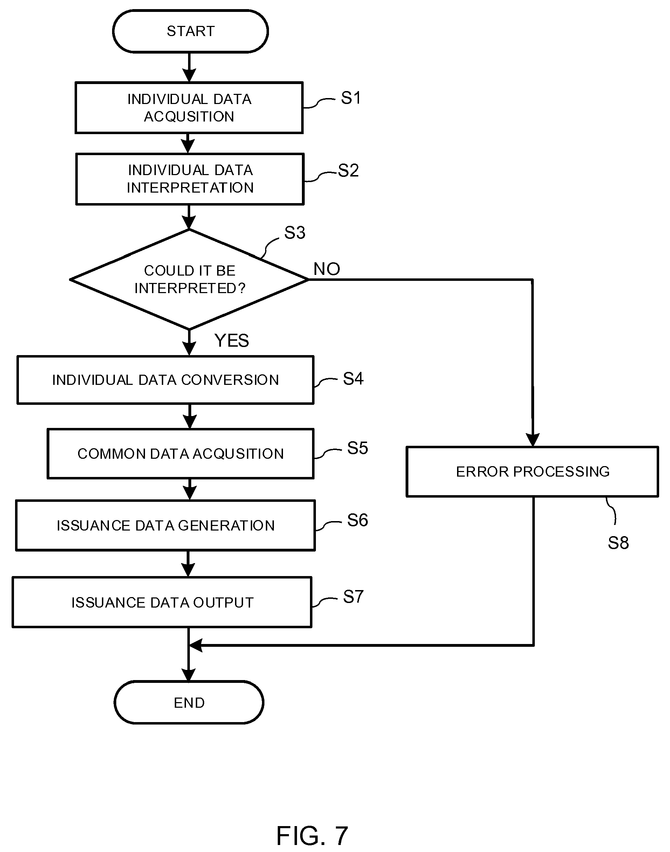

Hereinafter, the issuance data generating processing that is performed by the terminal device 1 will be described. Fig. 7 is a flowchart illustrating the issuance data generating processing that is performed by the terminal device 1 according to the embodiment. The processor 11 of the terminal device 1 performs the issuance data generating processing by executing the issuance data generation application stored in the nonvolatile memory 14. For example, the processor 11 may start the issuance data generation application in accordance with an instruction by an operator to the operating unit 15, or may execute the issuance data generation application in response to an input of the individual data D2 or the common data D1.

First, the processor 11 acquires the individual data D2 (step S1). That is, the individual data D2 is input to the terminal device 1 via, for example, the communication interface 17. Upon acquisition of the individual data, the processor 11 interprets the input individual data D2 (step S2). That is, the processor 11 analyzes the input individual data D2 with reference to the format information D3 stored in the storage region 14b of the nonvolatile memory 14. For example, the processor 11 specifies the format information D3 that corresponds to the input individual data D2 from among the multiple pieces of format information D3 stored in the storage region 14b. After having specified the format information D3 that corresponds to the input individual data D2, the processor 11 specifies the various types of information of the input individual data D2 based on the specified format information D3. The processor 11 determines that the individual data could be interpreted if the various types of information of the input individual data D2 could be specified based on the format information D3.

If the input individual data D2 could not be interpreted (No, in step S3), the processor 11 performs error processing (step S8). For example, as the error processing, the processor 11 may display, on the display unit 16, that the input individual data D2 could not be interpreted. Furthermore, the processor 11 may display, on the display unit 16, that the data format of the input individual data is a non-compliant (non-compatible) data format.

If the input individual data D2 could be interpreted (Yes, in step S3), the processor 11 converts the input individual data D2 into the individual data D2' in a predetermined data format (step S4). The data format of the individual data D2' may be any data format as long as it can be handled by the processor 11 that executes the issuance data generation application in order to generate the issuance data. For example, the individual data D2' in a predetermined data format may be data in which various types of information that are extracted from the input individual data D2 according to the interpretation based on the format information D3 are arranged in a predetermined format. The processor 11 may also convert the input individual data D2 into individual data D2' in a predetermined format by performing conversion processing associated with the corresponding format information D3 (D3a, ...).

Furthermore, the processor 11 acquires the common data D1 (step S5). That is, the common data D1 is input to the terminal device 1 via the communication interface 17. The processor 11 may acquire the common data D1 any time before the processor 11 generates the issuance data D4. For example, the processor 11 may acquire the common data D1 before the individual data D2, or may acquire the common data D1 at the same time as (in parallel to) the individual data D2. Furthermore, the processor 11 may acquire the common data D1 while processing the individual data D2, or may acquire the common data D1 after the input individual data D2 is converted into the individual data D2' in a predetermined format.

After having acquired the individual data D2' in a predetermined data format and the common data D1, the processor 11 generates the issuance data D4 (step S6). For example, the processor 11 generates the issuance data D4 by combining the individual data D2' in a predetermined data format and the common data D1. The issuance data D4 is data for the issuing device 2 to issue the IC card 3. The issuance data D4 includes, for example, magnetic coding data, IC chip coding data, embossing data, and the like.

After having generated the issuance data D4, the processor 11 outputs the generated issuance data D4 (step S7). For example, the processor 11 outputs the generated issuance data D4 to the issuing device 2. Furthermore, the processor 11 may store the generated issuance data D4 in a memory (the nonvolatile memory 14 or the RAM 13), and may output the generated issuance data D4 in response to a request from the issuing device 2. Furthermore, the processor 11 may record the issuance data D4 into an external device that is connectable to the issuing device 2, or a storage medium from which data is readable by the issuing device 2.

Note that the issuing device 2 acquires the issuance data D4 from the terminal device 1, and executes the issuing processing for the IC card 3 based on the acquired issuance data D4. The issuing device 2 executes the issuing processing for the IC card by recording the issuance data D4 into an IC card in the initial state. For example, the issuing device 2 initializes, using the IC reader/writer 26, a memory region of the IC card 3 in the initial state based on initialization information included in the issuance data D4. Furthermore, the issuing device 2 writes the IC chip coding data included in the issuance data D4 into the memory of the initialized IC card 3. Furthermore, the issuing device 2 writes, using the magnetic processing unit 27, the magnetic coding data of the issuance data D4 into the magnetic recording layer of the IC card 3 that is in the initial state. Furthermore, the issuing device 2 embosses, using the embossing unit 28, the substrate (body) of the IC card 3 in the initial state with characters and symbols based on the embossing data of the issuance data D4.

As described above, the terminal device 1 according to the embodiment interprets the data format of the input individual data, converts the input individual data into individual data in a predetermined data format, and generates issuance data for issuing an IC card by combining the individual data in a predetermined data format and the common data. Accordingly, even if the input individual data is not data in a predetermined data format used in generating issuance data, the terminal device 1 can generate issuance data including the individual data.

Furthermore, the terminal device 1 stores format information for respective types of individual data supported by the individual data interpretation unit 53 into the storage unit, and interprets the input individual data with reference to the format information stored in the storage unit. Accordingly, the terminal device 1 can automatically perform the processing for converting multiple types of individual data into individual data of a predetermined format, and thus it is neither necessary to convert the individual data into a predetermined format and input the individual data that was converted into the predetermined format to the terminal device 1, nor to manually perform the processing for converting the individual data into a predetermined format.

Note that the functions described in the above-described embodiments are not limited to ones configured by hardware, and it is also possible to realize the functions by using software to cause a computer to read programs in which the functions are described. Furthermore, the functions may be configured suitably by selecting software or hardware.

Although some embodiments of the present invention have been described, the embodiments are proposed as examples, and are not intend to limit the scope of the invention.

## Claims

1. A data processing device (1) for IC card issuance comprising:
a common data acquisition unit (51) configured to acquire common data (D1) to make an IC card (3) to be issued operable as an IC card;
an individual data acquisition unit (52) configured to acquire individual data (D2) that is to be recorded individually into the IC card (3) to be issued;
a storage unit (12, 13, 14) configured to store multiple pieces of format information (D3) that respectively indicate data formats of multiple types of individual data (D2);
a data interpretation unit (53) configured to determine a data format of the individual data (D2) acquired by the individual data acquisition unit (52), based on the format information (D3) stored in the storage unit (12, 13, 14);
a data conversion unit (54) configured to convert the individual data (D2) acquired by the individual data acquisition unit (52) into individual data (D2') in a predetermined data format based on the data format of the individual data (D2) determined by the data interpretation unit (53); and
an issuance data generation unit (55) configured to generate issuance data (D4) for use in issuing the IC card (3), based on the individual data (D2') in a predetermined data format converted by the data conversion unit (54) and the common data (D1) acquired by the common data acquisition unit (51).

2. The data processing device (1) according to claim 1,
wherein each piece of format information (D3) stored in the storage unit (12, 13, 14) indicates, as a data format, a file format and a data structure.

3. The data processing device (1) according to claim 1 or 2,
wherein at least one of the multiple pieces of format information (D3) stored in the storage unit (12, 13, 14) indicates, as a data format, a file format that is any one of a binary format, an XML format, a CSV format, and a text format.

4. The data processing device (1) according to any one of claims 1 to 3,
wherein at least one of the multiple pieces of format information (D3) stored in the storage unit (12, 13, 14) is information whose file format is the binary format, and whose data structure indicates offsets and data lengths of respective types of data.

5. The data processing device (1) according to any of claims 1 to 4,
wherein the data interpretation unit (53) is configured to determine the data format of the individual data (D2) acquired by the individual data acquisition unit (52) based on the format information (D3) stored in the storage unit (12, 13, 14), and further determines the information of the individual data (D2).

6. The data processing device (1) according to claim 5,
wherein the data conversion unit (54) is configured to generate individual data (D2') in a predetermined data format, based on the multiple pieces of information of the individual data (D2) determined by the data interpretation unit (53).

7. The data processing device (1) according to any of claims 1 to 6, further comprising:
a processor (11); and a communication interface (17),
wherein the storage unit (12, 13, 14) is configured to store an IC card issuance data generation application, and the processor (11) is configured to function as the common data acquisition unit (51), the individual data acquisition unit (52), the data interpretation unit (53), the data conversion unit (54), and the issuance data generation unit (55) by executing the IC card issuance data generation application.

8. The data processing device (1) according to claim 7,
wherein the common data acquisition unit (51) is configured to acquire the common data (D1) via the communication interface (17).

9. The data processing device (1) according to claim 7 or 8,
wherein the individual data acquisition unit (52) is configured to acquire the individual data (D2) via the communication interface (17).

10. An IC card issuance data generation method comprising the steps of:
acquiring common data (D1) to make an IC card (3) to be issued operable as an IC card;
acquiring individual data (D2) that is to be recorded individually into the IC card (3) to be issued;
determining a data format of the acquired individual data (D2) based on information stored in a storage unit (12, 13, 14), the storage unit (12, 13, 14) having stored multiple pieces of format information (D3) indicating data formats for multiple types of individual data (D2);
converting the acquired individual data (D2) into individual data (D2') in a predetermined data format based on the determined data format; and
generating issuance data (D4) for use in issuing the IC card (3) based on the converted individual data (D2') in a predetermined data format and the acquired common data (D1).
